# EUROPEAN PATENT APPLICATION

(11) **EP 2 957 998 A1**
(43) Date of publication of application: **23.12.2015**
(21) Application number: 15172988.6
(22) Date of filing: 19.06.2015
(51) Int. Cl.: G06F 3/042

(54) **INPUT DEVICE**

(30) Priority: 20.06.2014 JP 2014126845; 17.06.2015 JP 2015121904
(71) Applicant: Funai Electric Co., Ltd., Daito-shi, Osaka 574-0013 (JP)
(72) Inventor: CHIKAOKA, Atsuhiko, Daito-shi, Osaka 574-0013 (JP)
(74) Representative: Global IP Europe Patentanwaltskanzlei

(57) **Abstract**

[OBJECT] There is provided an input device with which erroneous determination of input manipulation details can be reduced.

[MEANS OF SOLVE THE PROBLEMS] An input device 1 includes a detector 10, 27 that detects an indicator 3 approaching an image surface S, and a processor 20 that performs input processing based on a detection result of the detector 10, 27. The processor 20 performs preliminary determination processing depending on the detection result, and performs determination processing for an input manipulation detail of the indicator 3 based on a result of the preliminary determination processing and the detection result.

## Description

### CROSS-REFERENCE TO RELATED APPLICATIONS

This application claims priority to Japanese Patent Application Nos. 2014-126845 filed on June 20, 2014 and 2015-121904 filed on June 17, 2015. The entire disclosures of Japanese Patent Application Nos. 2014-126845 and 2015-121904 are hereby incorporated herein by reference.

### [TECHNICAL FIELD]

The present invention relates to an input device.

### [BACKGROUND ART]

An input device has been known in the past which determines input manipulation details by calculating the contact coordinate position of an indicator (such as a finger or a pointer) with respect to an interface projected onto a screen or the like (see Patent Literature 1, for example). In Patent Literature 1, the coordinate position of the indicator is calculated by taking advantageous of the fact that when the indicator blocks the light rays, a shadow is produced in the image captured by an image sensor.

There is another conventional input device in which three-dimensional position information about an indicator located in the air above a control panel is acquired by using an imaging element or an infrared sensor, and details about input manipulation with the indicator are recognized based on the acquired three-dimensional position information (see Patent Literature 2, for example). With the configuration in Patent Literature 2, commands can be inputted without touching the control panel.

### [PRIOR ART DOCUMENT]

### [PATENT LITERATURE]

[Patent Literature 1] Japanese Unexamined Patent Application Publication No. 2011-203861
[Patent Literature 2] Japanese Unexamined Patent Application Publication No. 2010-12158

### [SUMMARY OF THE INVENTION]

### [PROBLEMS TO BE SOLVED BY THE INVENTION]

With the input devices in Patent Literature 1 and 2, since input manipulation details are not determined by pressing on buttons or other such mechanical parts, there is the risk that these input manipulation details will be erroneously determined. With the configuration in Patent Literature 1, a technique is disclosed in which the device accurately distinguishes between contact and non-contact of the manipulation screen by focusing on the roundness of the distal end portion of the indicator. However, with the configuration in Patent Literature 1, it is conceivable that erroneous determination will not be adequately reduced if, for example, we assume a wide variety of input manipulations made by the hands of the users.

In light of the above, it is an object of the present invention to provide an input device with which erroneous determination of input manipulation details can be reduced. It is another object of the present invention to provide an input device with which there will be very little erroneous determination, even when a wide variety of input manipulations are involved.

### [MEANS TO SOLVE THE PROBLEMS]

To achieve the stated object, the input device of the present invention comprises a detector configured to detect an indicator approaching an image surface, and a processor configured to perform input processing based on a detection result of the detector, the processor being configured to perform preliminary determination processing depending on the detection result, and configured to perform determination processing for an input manipulation detail of the indicator based on a result of the preliminary determination processing and the detection result (first configuration).

With this configuration, the preliminary determination processing is performed before determining the input manipulation detail of the indicator. This reduces the probability that the input manipulation detail will be incorrectly determined.

With the input device having the first configuration, it is preferable if the preliminary determination processing includes processing to determine a manipulation region in which input will be made, and if the processor is configured to change the determination processing of the input manipulation detail according to the manipulation region (second configuration). With this configuration, since the manipulation region can be ascertained in advance according to the preliminary determination processing, the input manipulation detail can be properly determined according to the manipulation region. Accordingly, many different input manipulations can be easily accomplished with an input device with this configuration.

With the input device having the second configuration, it is preferable if configuration is such that the manipulation region is determined using the brightness obtained from the detection result produced by the detector (third configuration). With this configuration, the position of an indicator approaching an image surface can be easily and accurately estimated, and the probability that erroneous determination will occur can be reduced.

With the input device having the second or third configuration, the configuration may be such that the manipulation region includes a first region and a second region, and the width in a direction perpendicular to the image surface is different in the first region and the second region (fourth configuration). With this configuration, erroneous determination is unlikely to occur in an input device that accommodates a plurality of manipulations that are completely different in how the input manipulation is performed.

With the input device having the fourth configuration, the processor may be configured such that when the manipulation region is determined to the first region, the processor is configured to determine the input manipulation detail according to the indicated position of the indicator, and when the manipulation region is determined to be the second region, the processor is configured to determine the input manipulation detail according to at least one of the shape and movement of the indicator (fifth configuration). With this configuration, it is possible to provide an input device that accepts pointing inputs and gesture inputs, and an input device with which erroneous determination is unlikely to occur.

With the input device having any of the first to fifth configurations, it is preferable if the configuration is such that the preliminary determination processing includes processing to determine manipulation orientation of the indicator (sixth configuration). With this configuration, since the input manipulation detail of the indicator are determined by taking into account a previously obtained manipulation orientation, erroneous determination of the input manipulation detail can be reduced.

With the input device having the sixth configuration, the configuration may be such that the manipulation orientation is determined from the detection result in a first detection layer, and the processor is configured to determine the input manipulation detail based on the manipulation orientation obtained in the preliminary determination processing and the detection result in a second detection layer provided closer to the image surface than the first detection layer (seventh configuration). The second detection layer is preferably provided adjacent to the image surface. With this configuration, the manipulation orientation of the indicator in the first detection layer is determined based on information from the detector prior to determining the input manipulation detail of the indicator in the second detection layer based on information from the detector. A predetermined manipulation orientation is then taken into account to determine the input manipulation detail of the indicator in the second detection layer. Accordingly, with this configuration, erroneous determination of the input manipulation detail can be reduced.

With the input device having the seventh configuration, it is preferable if the configuration is such that the processor is configured not to determine the input manipulation detail in the second detection layer if the manipulation orientation has been determined to be a particular orientation, and configured to determine the input manipulation detail based on the movement of the indicator between the image surface and the first detection layer (eighth configuration). With this configuration, a first input manipulation in which input is performed by indicating a particular region of the image surface with an indicator, and a second input manipulation in which input is performed by making a gesture in front of the image surface, can both be performed, which affords a versatile input device. Also, with this configuration, since the input manipulation detail is determined by taking a predetermined manipulation orientation into account, it is less likely that erroneous determination will be performed in which the first input manipulation and the second input manipulation are mixed.

With the input device having the eighth configuration, a configuration may be employed in which, when the input manipulation detail is determined based on the movement of the indicator, the movement speed of the indicator is utilized to determine the input manipulation detail (ninth configuration). Also, with the input device having the eighth configuration, a configuration may be employed in which, when the input manipulation detail is determined based on the movement of the indicator, and when it is determined that the indicator has moved into the second detection layer, it is determined that an input manipulation based on the movement of the indicator has ended (tenth configuration).

With the input device having any of the seventh to tenth configurations, the configuration may be such that the processor is configured to determine the input manipulation detail in the second detection layer based on a change in the state of the indicator that accompanies contact with the image surface (eleventh configuration). An example of a change in the state of the indicator is the flattening of a finger when the finger is pressed against the image surface. With this configuration, there are more determination conditions in the determination of input manipulation detail, so erroneous determination can be further reduced.

With the input device having any of the sixth to eleventh configurations, the configuration may be such that the processor is configured to determine the manipulation orientation based on the light intensity distribution (twelfth configuration). Also, with the input device having the twelfth configuration, a configuration may be employed in which the indicator is a hand, and the processor is configured to determine that input has been made with a finger when there is a bias to the light intensity distribution (thirteenth configuration). Also, with the input device having the twelfth or thirteenth configuration, a configuration may be employed in which the indicator is a hand, and it is determined that input has been made with the palm of the hand when the light intensity distribution is spread out by at least a certain amount (fourteenth configuration).

With the input device having any of the sixth to eleventh configurations, the configuration may be such that the processor is configured to determine the manipulation orientation based on a temporal change in the detection result (fifteenth configuration).

With the input device having any of the first to fifteenth configurations, it is preferable if the configuration is such that the detector comprises a light source, an optical scanner that is configured to scan light from the light source, and a light receiver that is configured to receive reflected light by the indicator of the light that has been scanned by the optical scanner (sixteenth configuration). With this configuration, no imaging element is used that would require complicated processing and entail the risk of diminished responsiveness, and an input device can be provided with which various input manipulations are possible using the movement of a hand, for example.

With the input device having the sixteenth configuration, it is preferable if the configuration is such that a detection layer used for the preliminary determination processing and a detection layer used for determination processing of the input manipulation detail are disposed on an opposite side from the light receiver and the light source, with the image surface in between (seventeenth configuration). With this configuration, when an input manipulation is made, there will be a lower probability that light emitted from the light source will be reflected by an object other than the indicator (such as part of the user's body), so accurate determination of the input manipulation detail can be performed more easily.

With the input device having the sixteenth or seventeenth configuration, a configuration may be employed in which emission strength of the light source is varied according to the position of the indicator (eighteenth configuration). With the input device having the eighteenth configuration, a configuration may be employed in which the preliminary determination processing includes processing to determine the manipulation orientation of the indicator detected in the first detection layer, and the emission strength of the light source is varied according to the relation between the indicator and the first detection layer (nineteenth configuration). With these configurations, the preliminary determination processing can be performed more accurately. For example, the emission strength of the light source may be increased if the indicator is moving toward or into the first detection layer.

With the input device having any of the first to nineteenth configurations, the configuration may further comprise a notification processor configured to notify of a determination result for the input manipulation detail (twentieth configuration). For example, notification processing performed by a controller equipped with an input device may be processing to change the screen display, processing to generate a sound, or the like. With this configuration, the user can more easily recognized whether or not his input manipulation was properly accepted.

### [EFFECTS OF THE INVENTION]

The present invention provides an input device with which erroneous determination of input manipulation details can be reduced. The present invention also provides an input device with which there will be very little erroneous determination, even when a wide variety of input manipulations are involved.

### [BRIEF DESCRIPTION OF THE DRAWINGS]

FIG. 1 is a block diagram of the configuration of the input device pertaining to a first embodiment of the present invention;
FIG. 2 is a first schematic illustrating the orientation of a hand (an example of an indicator) when performing an input manipulation by hand on the input device pertaining to the first embodiment of the present invention;
FIG. 3 is a second schematic illustrating the orientation of a hand (an example of an indicator) when performing an input manipulation by hand on the input device pertaining to the first embodiment of the present invention;
FIG. 4 is an image of an example of detecting the state of a hand in an orientation detection layer;
FIG. 5 is a flowchart illustrating an example of the procedure for determining input manipulation details in the input device pertaining to the first embodiment of the present invention;
FIG. 6 is a flowchart of details of manipulation determination processing A executed in the input device pertaining to the first embodiment of the present invention;
FIG. 7 is a flowchart of details of manipulation determination processing B executed in the input device pertaining to the first embodiment of the present invention;
FIG. 8 is a schematic illustrating a method for determining the orientation of a hand in the input device of a second embodiment;
FIG. 9 is a schematic illustrating the orientation of a hand when input manipulation is performed with a gesture involving the hand in the input device pertaining to a third embodiment of the present invention;
FIG. 10 is a flowchart illustrating an example of the procedure for determining input manipulation details in the input device pertaining to the third embodiment of the present invention;
FIG. 11 is a flowchart of details of manipulation determination processing C executed in the input device pertaining to the third embodiment of the present invention;
FIG. 12 is a flowchart of details of manipulation determination processing C executed in the input device pertaining to a fourth embodiment of the present invention;
FIG. 13 is a simplified diagram illustrating a manipulation region in the input device pertaining to the fifth embodiment of the present invention; and
FIG. 14 is a flowchart of an input processing example executed by the input device pertaining to the fifth embodiment of the present invention.

### [EMBODIMENTS TO CARRY OUT THE INVENTION]

The input device pertaining to an embodiment of the present invention will now be described through reference to the drawings.

### <First Embodiment>

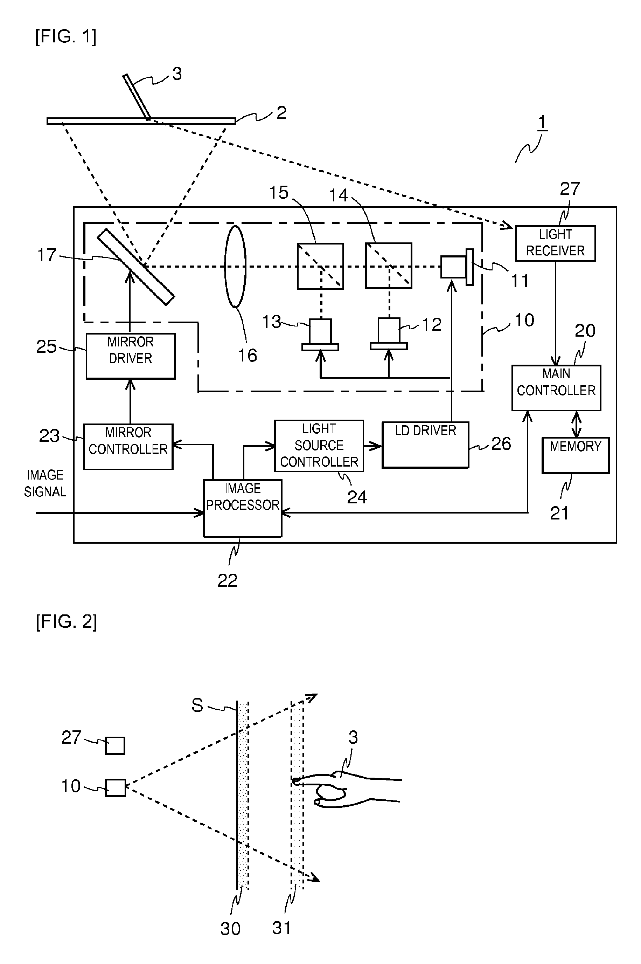

FIG. 1 is a block diagram of the configuration of the input device 1 pertaining to a first embodiment of the present invention. The input device 1 pertaining to the first embodiment comprises not only an input function, but also a function of projecting an image from the rear onto a screen 2. The screen 2 is a transmitting type of screen, and is made of acrylic, glass, or another such semitransparent material, for example.

As shown in FIG. 1, the input device 1 comprises a light source unit 10. The light source unit 10 includes three light sources: a red laser light source 11, a green laser light source 12, and a blue laser light source 13. The light source unit 10 also includes a first beam splitter 14 that transmits red laser light and reflects green laser light, and a second beam splitter 15 that transmits red laser light and green laser light and reflects blue laser light. The light source unit 10 further includes a collimator lens 16 and a scanning mirror 17.

The scanning mirror 17 can be constituted by a resonance type of MEMS (Micro Electro Mechanical System) mirror, for example. The scanning mirror 17 can be driven biaxially in the horizontal direction (X direction) and the vertical direction (Y direction, and scans a laser beam two-dimensionally. The scanning mirror 17 scans the laser beam in frame units of the image. The scanning mirror 17 changes the scanning position according to the number of pixels of the image during one frame. The scanning mirror 17 is an example of the optical scanner of the present invention.

A main controller 20 controls the various components that make up the input device 1. A memory 21 stores various kinds of program that are executed by the input device 1, and various kinds of data that are needed in executing these programs. The main controller 20 is an example of the processor of the present invention.

An image processor 22 controls the projection of the image onto the screen 2 based on an image signal inputted from the outside. More specifically, the image processor 22 controls the drive of the scanning mirror 17 via a mirror controller 23 based on an image signal inputted from the outside. The image processor 22 also controls the drive of the three light sources via a light source controller 24 based on an image signal inputted from the outside. Consequently, an image based on the image signal is displayed on the screen 2. An example of what is displayed on the screen 2 is an image of a group of ink keys for performing input manipulation.

The mirror controller 23 controls a mirror driver 25 that drives the scanning mirror 17, based on control by the image processor 22. The light source controller 24 also controls a laser diode (LD) driver 26 that drives the light sources 11 to 13, based on control by the image processor 22. The light source controller 24 controls the LD driver 26 so that the colors of the emitted laser light correspond to the various pixels of the image, at the timing at which the scanning mirror 17 is scanned.

The input device 1 comprises a light receiver 27 that receives reflected light obtained when the laser light emitted from the light source unit 10 is reflected by an indicator 3. Typical examples of the indicator 3 are a person's hand and fingers. Information detected by the light receiver 27 is outputted to the main controller 20. The main controller 20 acquires the position of the indicator 3 in the XY direction (a position within a plane parallel to the image surface) based on the laser beam scanning path and information about the time at which the reflected light was received by the light receiver 27. The main controller 20 also acquires the position in the Z direction (a position in a direction perpendicular to the image surface) of the indicator 3 based on the intensity of light emitted from the light source unit 10 and the intensity of light received by the light receiver 27. The main controller 20 determines the input manipulation details for the user based on a particular position of the indicator 3.

The light source unit 10 (including the scanning mirror 17) and the light receiver 27 constitute the detector of the present invention. In this embodiment, the light receiver 27 is constituted by a single light receiving element, but in some cases the light receiver 27 may be constituted by a plurality of light receiving elements.

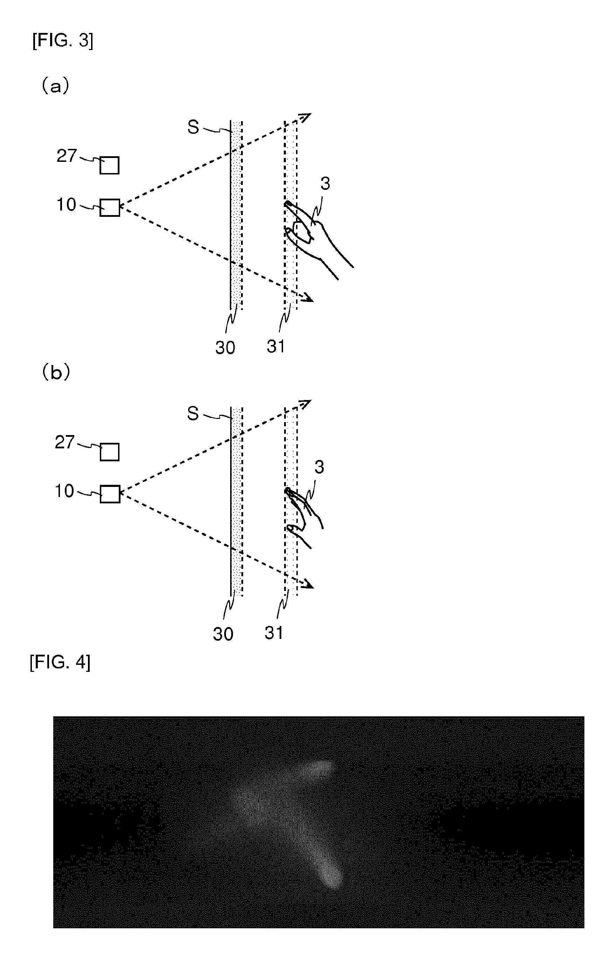

FIGS. 2 and 3 are schematics illustrating the orientation of a hand (an example of the indicator 3) when performing an input manipulation by hand on the input device 1. The input device 1 determines the input manipulation details by detecting the position of the hand that has moved into a proximal manipulation layer 30 provided in close proximity ahead of an image surface S (expressed from the viewpoint of the user). The light source unit 10 and the light receiver 27 are disposed on the opposite side from the proximal manipulation layer 30, with the image surface S in between.

As shown in FIG. 2, for example, when the hand 3 approaches the image surface S while one finger is jutting out toward the image surface S, it is determined that a specific region of the image has been pressed by that finger, and an event corresponding to this determination is executed. As shown in FIG. 3, when the hand 3 approaches the image surface S while a plurality of fingers are jutting out toward the image surface S, it is determined that a number of specific regions of the image have pressed by those fingers, and events corresponding to this determination are executed. The number of fingers jutting toward the image surface S are different in FIGS. 3(a) and 3(b).

When the input manipulation details are determined as above, there is the possibility that the manipulation details will be erroneously determined due to reflection or the like from a finger that was not supposed to perform input manipulation. The input device 1 is designed to avoid such erroneous determination, and this will be described below.

As shown in FIGS. 2 and 3, in the input device 1, an orientation detection layer 31 is provided at a position that is farther away from the front side than the proximal manipulation layer 30 (expressed from the viewpoint of the user), as seen from the image surface S. The orientation detection layer 31 pre-determines the manipulation orientation of the hand 3 approaching the proximal manipulation layer 30, and can estimate to a certain extent the input manipulation details in the proximal manipulation layer 30 from this manipulation orientation. The proximal manipulation layer 30 is an example of the second detection layer in the present invention. The orientation detection layer 31 is an example of the first detection layer in the present invention.

FIG. 4 is an image of an example of the detection result for the state of the hand 3 in the orientation detection layer 31. The result shown in FIG. 4 is for a case in which two fingers are sticking out while the hand 3 is moved toward the image surface S. As can be seen from the result shown in FIG. 4, the orientation (shape) of the hand 3, including the depth direction (Z direction) of the hand 3 can be estimated from the intensity distribution of the light reflected from the hand 3. Accordingly, the input device 1 is configured to determine the orientation by utilizing the intensity distribution of light detected by the light receiver 27.

At the point when the hand 3 approaches the orientation detection layer 31, the emission intensity of the laser beam may be raised in the light source unit 10. Doing this raises the intensity of the light reflected from the hand 3, and makes it easier to determine the manipulation orientation, including the depth of the hand 3.

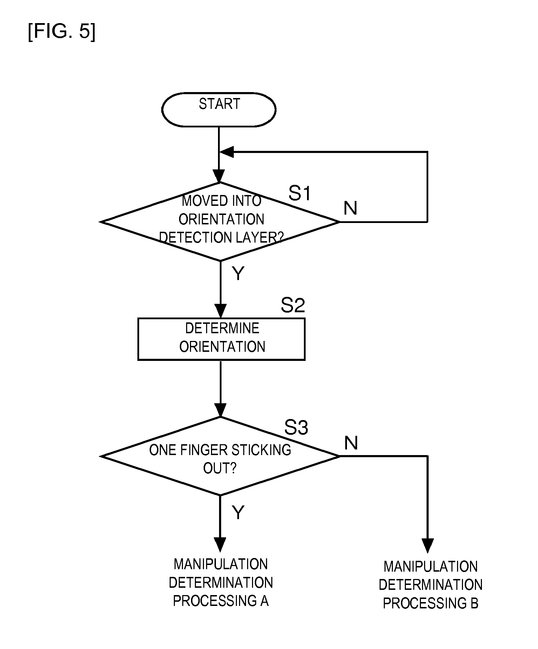

FIG. 5 is a flowchart illustrating an example of the procedure for determining input manipulation details in the input device 1 pertaining to the first embodiment of the present invention. First, the main controller 20 confirms whether or not the hand (indicator) 3 has moved into the orientation detection layer 31 (step S1). The main controller 20 continues this monitoring until the hand 3 does move into the orientation detection layer 31. Whether or not the hand 3 has moved into the orientation detection layer 31 can be determined, for example, based on the intensity (optical intensity) of the light reflected from the hand 3 and detected by the light receiver 27.

If it is determined that the hand 3 has moved into the orientation detection layer 31 (Yes in step S1), the main controller 20 determines the orientation of the hand 3 that has moved into the orientation detection layer 31 (step S2). The main controller 20 confirms whether or not a single finger of the hand 3 is pointing toward the screen 2 as a result of the orientation determination (step S3). If one finger of the hand 3 is sticking out (Yes in step S3), the main controller 20 performs manipulation determination processing A. If one finger of the hand 3 is not sticking out (No in step S3), the main controller 20 performs manipulation determination processing B.

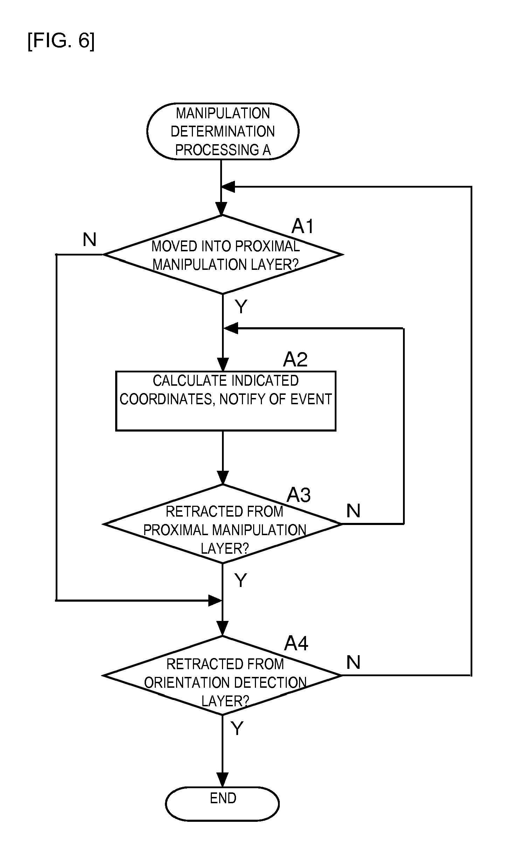

FIG. 6 is a flowchart of the details of the manipulation determination processing A executed by the input device 1 pertaining to the first embodiment of the present invention. Upon determining that the hand 3 is in an orientation in which one finger is jutting out toward the screen 2, the main controller 20 confirms whether or not the finger (the jutting finger) of the hand 3 detected in the orientation detection layer 31 has moved into the proximal manipulation layer 30 (step A1). Just as with the orientation detection layer 31, whether or not the finger has moved into the proximal manipulation layer 30 can be determined based on the intensity of the reflected light detected by the light receiver 27, for example.

If it is determined that a particular finger of the hand 3 has moved into the proximal manipulation layer 30 (Yes in step A1), the position indicated by the finger of the hand 3 (the XY coordinates) is calculated, and an event corresponding to that coordinate position is executed (step A2). In this embodiment, the user is visually notified that a manipulation has been accepted (event notification). There are no particular restrictions on the notification method, which may be suitably selected so that it will be easy for the user to recognize. For example, the color of a virtual key determined to have undergone input manipulation (displayed as an image on the screen 2) may be changed, or the color the border of an image, or of the entire image, may be changed. Also, notification by sound may be used instead of visual notification.

After the processing to execute an event is finished, the main controller 20 confirms whether or not the finger of the hand 3 has been retracted from the proximal manipulation layer 30 (step A3). If it is determined that the finger of the hand 3 has not been retracted from the proximal manipulation layer 30 (No in step A3), the flow returns to step A2, the coordinate position of the finger is recalculated, and processing related to the event execution is performed as needed.

On the other hand, if it is determined that the finger of the hand 3 has been retracted from the proximal manipulation layer 30 (Yes in step A3), the main controller 20 confirms whether or not the hand 3 has also been retracted from the orientation detection layer 31 (step A4). If it is determined that the hand 3 has been retracted from the orientation detection layer 31 (Yes in step A4), the manipulation processing A is ended. If it is determined that the hand 3 has not been retracted from the orientation detection layer 31 (No in step A4), the flow returns to step S1, and determination processing related to input manipulation is performed.

If it is determined in step A1 that a particular finger of the hand 3 has not moved into the proximal manipulation layer 30 (No in step A1), the main controller 20 performs a confirmation of step A4 and performs processing according to this confirmation.

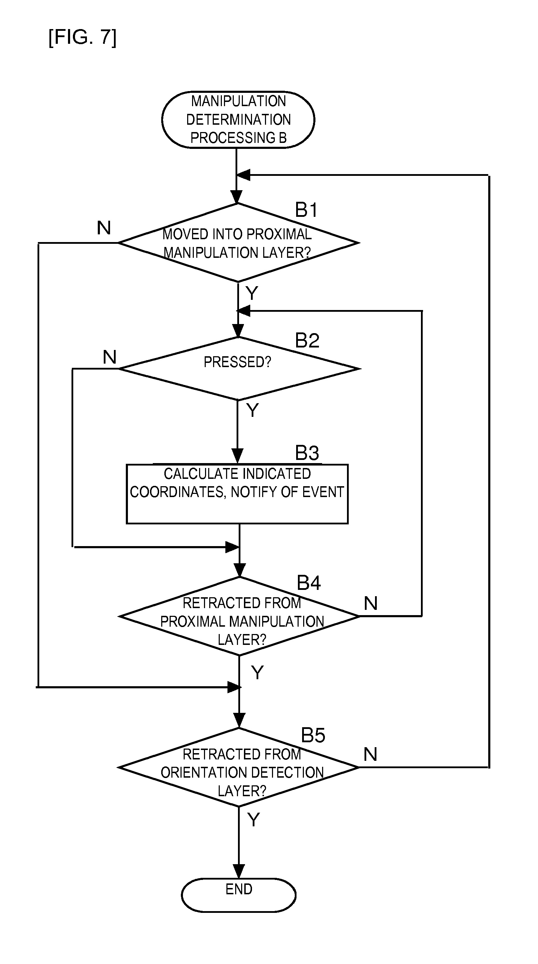

FIG. 7 is a flowchart showing the details of the manipulation determination processing B executed by the input device 1 pertaining to the first embodiment of the present invention. Upon determining that the hand 3 is not in a state in which one finger is sticking out toward the screen 2, the main controller 20 confirms whether or not the hand 3 (finger) has moved into the proximal manipulation layer 30 according to the manipulation orientation detected in the orientation detection layer 31 (step B1). Whether or not the hand has moved into the proximal manipulation layer 30 can be determined based on the intensity of the reflected light detected by the light receiver 27, for example.

If it is determined that the hand 3 has moved into the proximal manipulation layer 30 in the expected manipulation orientation (Yes in step B1), the main controller 20 confirms whether or not the hand 3 (finger) has been pressed against the screen 2 (image surface S) (step B2). Whether or not the hand 3 has been pressed can be determined by sensing the state of the hand 3 at the proximal manipulation layer 30 in time series. If it has been pressed, there will be a change, such as a flattening of the pad of the finger. If it has not been pressed, however, there will be no flattening of the finger pad, etc.

If the hand 3 has been pressed (Yes in step B2), the main controller 20 calculates the position (XY coordinates) indicated by the hand 3 (such as the finger of the hand expected from the orientation sensed by the orientation detection layer 31), and executes the event corresponding to that coordinate position (step B3). In this embodiment, when an even is executed, the user is also notified of the event.

If, on the other hand, it is determined that the hand 3 has not been pressed (No in step B2), the coordinates are not calculated and no event is executed. In this case the flow proceeds to step B4.

After the processing to execute the event is finished, or if it has been determined in step 2 that the hand was not pressed, the main controller 20 confirms whether or not the hand 3 has been retracted from the proximal manipulation layer 30 (step B4). If it is determined that the hand 3 has not been retracted from the proximal manipulation layer 30 (No in step B4), the flow returns to step B2 and it is again confirmed whether or not the hand 3 has been pressed.

Meanwhile, if it is determined that the hand 3 has been retracted from the proximal manipulation layer 30 (Yes in step B4), the main controller 20 confirms whether or not the hand 3 has also retracted from the orientation detection layer 31 (step B5). If it is determined that the hand 3 has retracted from the orientation detection layer 31 (Yes in step B5), the manipulation determination processing B is ended. If it is determined that the hand 3 has not retracted from the orientation detection layer 31 (No in step B5), the flow returns to step S1 and determination processing related to input manipulation is performed.

If it is determined in step B1 that the hand 3 has not moved into the proximal manipulation layer 30 in the expected orientation (No in step B1), the main controller 20 confirms step B5 and performs processing according to this confirmation.

With the configuration of the first embodiment described above, the manipulation orientation of the indicator 3 is determined before the indicator 3 moves into the proximal manipulation layer 30, and the determined manipulation orientation is added in the determination of the input manipulation details at the proximal manipulation layer 30. Accordingly, the probability of erroneous determination of the input manipulation details can be reduced. Also, with the configuration of the first embodiment, if there is no particular need to detect whether the indicator has been pressed in, this detection processing is not performed. Therefore, the determination processing for input manipulation can be far simpler, and faster response can be anticipated.

### <Second Embodiment>

The input device 1 in the second embodiment will now be described. The configuration of the input device 1 in the second embodiment is substantially the same as the configuration in the first embodiment, but the main controller 20 uses a different method to estimate the manipulation orientation (shape) of the hand 3. The following description will focus on this difference.

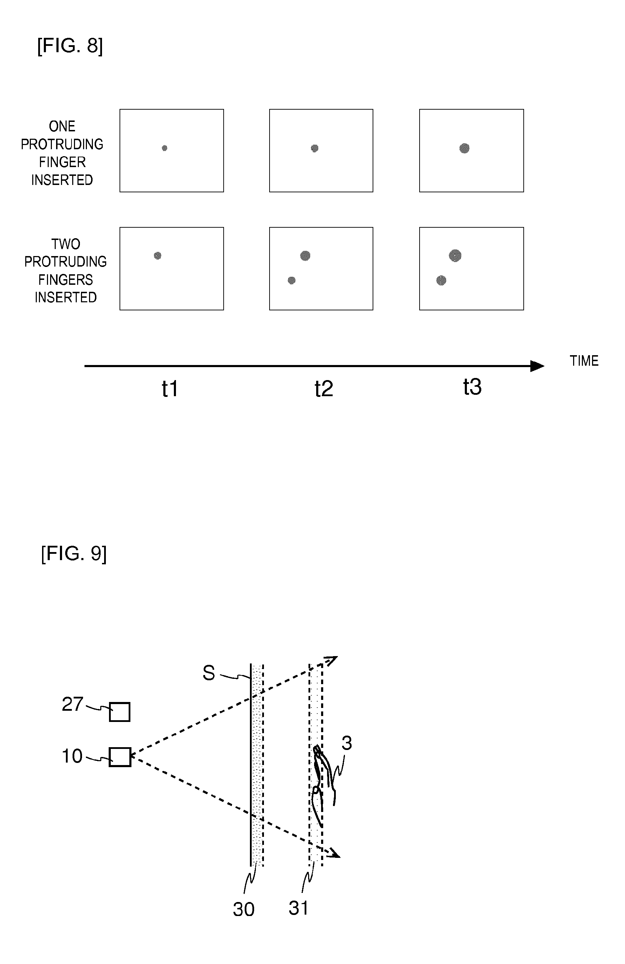

FIG. 8 is a schematic illustrating a method for determining the orientation of the hand 3 in the input device 1 of the second embodiment. In FIG. 8, the upper row shows the state when a hand 3 from which one finger is sticking out moves toward the image surface S (the screen 2). The lower row shows the state when a hand 3 from which two fingers are sticking out moves toward the image surface S. In FIG. 8, the upper and lower rows each show three states, which shows the change over time in the state of the hand 3 detected at the orientation detection layer 31.

As shown in the upper row in FIG. 8, when a hand 3 from which one finger is sticking out moves toward the image surface S, a single dot continues to be detected at time t1 (corresponds to the time at which the hand 3 is first detected in the orientation detection layer 31, for example), time t2, and time t3. Also, as shown in the lower row of FIG. 8, when a hand 3 from which two fingers are sticking out moves toward the image surface S, the number of dots detected changes from one to two during the transition from time t1 to time t3. As can be seen from this example, the orientation (shape) of the hand 3 can be estimated by collecting the reflected light as the hand 3 passes through the orientation detection layer 31, with the light receiver 27 in time series fashion.

In this embodiment, the main controller 20 subjects a signal in the orientation detection layer 31 (a signal obtained from the light receiver 27) to binarization depending on whether or not this signal exceeds a specific threshold. There are no particular restrictions on the time interval when the above-mentioned reflected light is collected in time series, which may be decided as desired.

Again with the configuration of the second embodiment described above, it is possible to determine the manipulation orientation of the indicator 3 before the indicator 3 moves into the proximal manipulation layer 30. The input device 1 in the second embodiment gives the same effect as in the first embodiment.

### <Third Embodiment>

Next, the input device 1 in a third embodiment will be described. The configuration of the input device 1 in the third embodiment is substantially the same as the configuration in the first embodiment, but the third embodiment differs from the configuration of the first embodiment in that input manipulation (non-contact manipulation) can also be performed on gestures made by the hand 3, in addition to input manipulation (non-contact manipulation) performed by having the hand 3 (finger) come into contact with the image surface S (the screen 2). The following description will focus on this difference.

FIG. 9 is a schematic illustrating the orientation of a hand when input manipulation is performed with a gesture involving the hand 3 in the input device 1 pertaining to the third embodiment of the present invention. As shown in FIG. 9, when input manipulation is performed by gesture, the fingers of the hand 3 do not jut out toward the image surface S, and the entire hand approaches the image surface S in an orientation that is substantially parallel to the image surface S. The main controller 20 is able to use information obtained from the light receiver 27 to determine movement of the hand 3 between the image surface S and the orientation detection layer 31. The orientation of the hand 3 shown in FIG. 9 is an example of the certain orientation of the present invention.

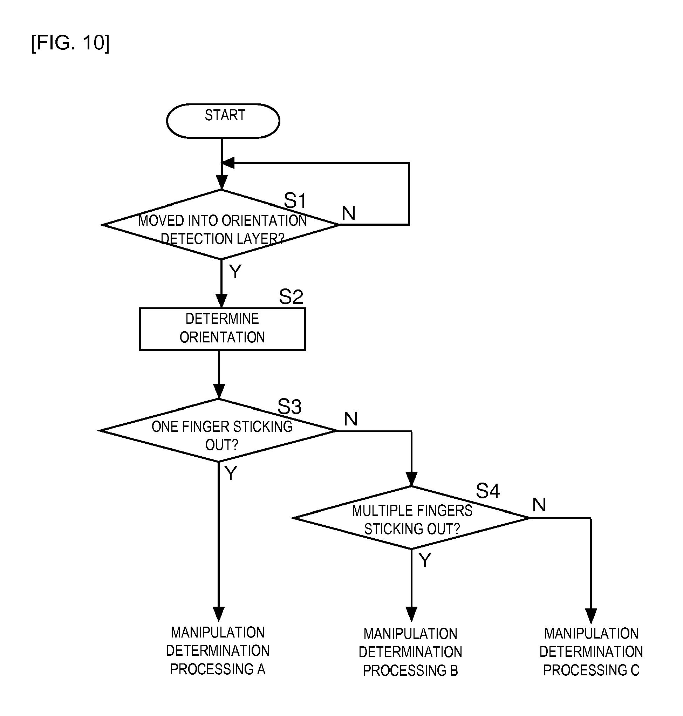

FIG. 10 is a flowchart illustrating an example of the procedure for determining input manipulation details in the input device 1 pertaining to the third embodiment of the present invention. First, the main controller 20 confirms whether or not the hand 3 has moved into the orientation detection layer 31 (step S1). The main controller 20 continues this monitoring until the hand 3 does move into the orientation detection layer 31. Whether or not the hand 3 has moved into the orientation detection layer 31 can be determined, for example, based on the intensity of the light reflected from the hand 3 and detected by the light receiver 27.

If it is determined that the hand 3 has moved into the orientation detection layer 31 (Yes in step S1), the main controller 20 determines the orientation of the hand 3 that has moved into the orientation detection layer 31 (step S2). As a result of determining the orientation, the main controller 20 confirms whether or not one finger or the hand 3 is sticking out toward the screen 2 (step S3). If the hand 3 is in a state in which one finger is sticking out (Yes in step S3), the main controller 20 performs the manipulation determination processing A.

On the other hand, if the hand 3 is not in a state in which one finger is sticking out (No in step S3), the main controller 20 confirms whether or not the hand 3 is in a state in which two or more fingers are sticking out (step S4). If a plurality of fingers are sticking out from the hand 3 (Yes in step S4), the main controller 20 performs the manipulation determination processing B. If the hand 3 is not in a state in which fingers are sticking out (No in step S4), manipulation determination processing C is performed.

The manipulation determination processing A and B are the same as the processing described in the first embodiment. Thus, detailed explanation of these processing will be omitted, and the manipulation determination processing C will only be explained.

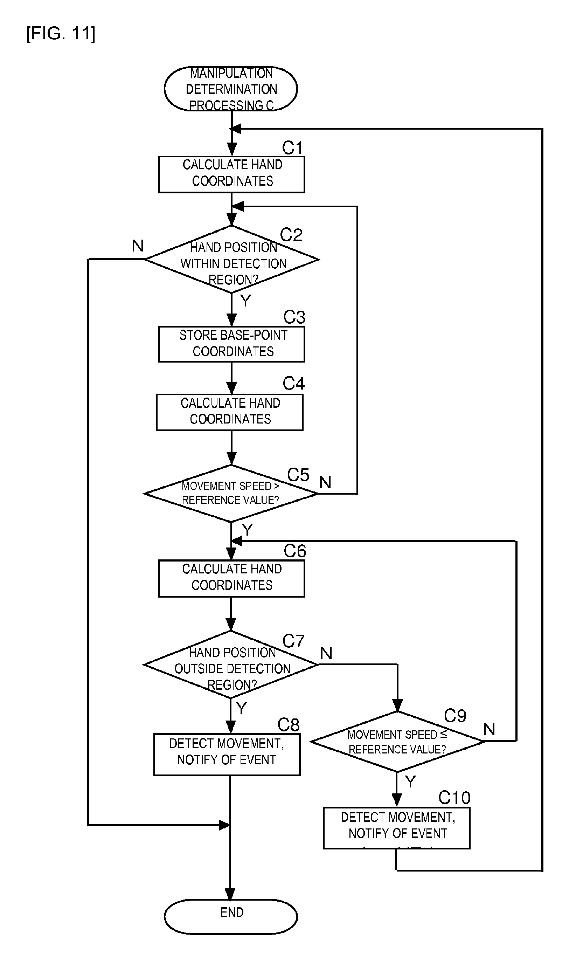

FIG. 11 is a flowchart of details of manipulation determination processing C executed in the input device 1 pertaining to the third embodiment of the present invention. Upon deciding that no fingers are sticking out from the hand 3 toward the image surface S, the main controller 20 calculates the position of the hand 3 (the hand coordinates; the XYZ coordinates) (step C1). The hand coordinates can be calculated from information obtained from the light receiver 27 that receives the reflected light from the hand 3. The hand coordinates may be coordinates for one particular place on the hand 3, or may be coordinates from a number of particular places on the hand 3.

The main controller 20 then confirms whether or not the position of the hand 3 is within a gesture detection region (step C2). The gesture detection region refers to a region between the image surface S and the orientation detection layer 31. The orientation detection layer 31 may be included in the gesture detection region.

If the hand 3 is within the gesture detection region (Yes in step C2), the main controller 20 stores the hand coordinates calculated in step C1 in the memory 21 as base-point coordinates (step C3). After this, the main controller 20 calculates the hand coordinates again (step C4). The main controller 20 calculates the movement speed of the hand 3 based on the base-point coordinates already stored and the hand coordinates calculated subsequently, and determines whether or not this movement speed exceeds a predetermined reference value (step C5).

If the movement speed is at or under the reference value (No in step C5), the main controller 20 determines that the hand 3 is barely moving and a gesture has yet to start (Yes in step C5), and the flow returns to step C2. On the other hand, if the movement speed exceeds the reference value (Yes in step C5), it is determined that a gesture has started, and the hand coordinates are calculated again (step C6). After this, the main controller 20 confirms whether or not the position of the hand 3 is outside the gesture detection region (step C7).

If the position of the hand 3 is outside the gesture detection region (Yes in step C7), it is determined that the gesture has already ended. Accordingly, the main controller 20 uses the information obtained from the light receiver 27 to detect movement of the hand 3 up to this point, execute an event, and notify the user of this (step C8). The main controller 20 then ends the manipulation determination processing C. On the other hand, if the position of the hand 3 is within the gesture detection region (No in step C7), the movement speed is calculated form the previously acquired hand coordinates (which correspond here to steps C4 and C6), and it is determined whether or not this movement speed is at or under a predetermined reference value (step C9).

If the movement speed is at or under the reference value (Yes in step C9), the main controller 20 determines that the movement of the hand 3 has substantially stopped, and the gesture is finished. The main controller 20 then uses information obtained from the light receiver 27 to detect the movement of the hand 3 up to this point, execute an event, and notify the user of this (step C10). After this, the main controller 20 goes back to step C1 and repeats the processing from that point on. On the other hand, if the movement speed exceeds the reference value (No in step C9), it is determined that the gesture is not finished yet, the flow returns to step C6, and the processing is repeated form that point on.

With the configuration of the third embodiment discussed above, the same effect can be anticipated as with the first embodiment. Furthermore, with the configuration of the third embodiment, a first input manipulation in which input is performed by indicating a particular region of the image surface S with the indicator, and a second input manipulation in which input is performed by making a gesture in front of the image surface S can be combined to allow a wide variety of input manipulations. With the configuration of the third embodiment, since input manipulation details are determined by taking into account a previously detected manipulation orientation, it is less likely that the above-mentioned first and second input manipulations will be mixed up so that erroneous determination is performed.

### <Fourth Embodiment>

Next, the input device 1 of a fourth embodiment will be described. The input device 1 in the fourth embodiment is similar to the configuration of the third embodiment in that input manipulation (non-contact manipulation) can be performed by a gesture with the hand 3, in addition to an input manipulation (contact manipulation) in which the hand 3 touches the image surface S. What is different, however, is the manipulation determination processing C, which is processing performed when it is expected that gesture input will be performed. The following description will focus on this difference.

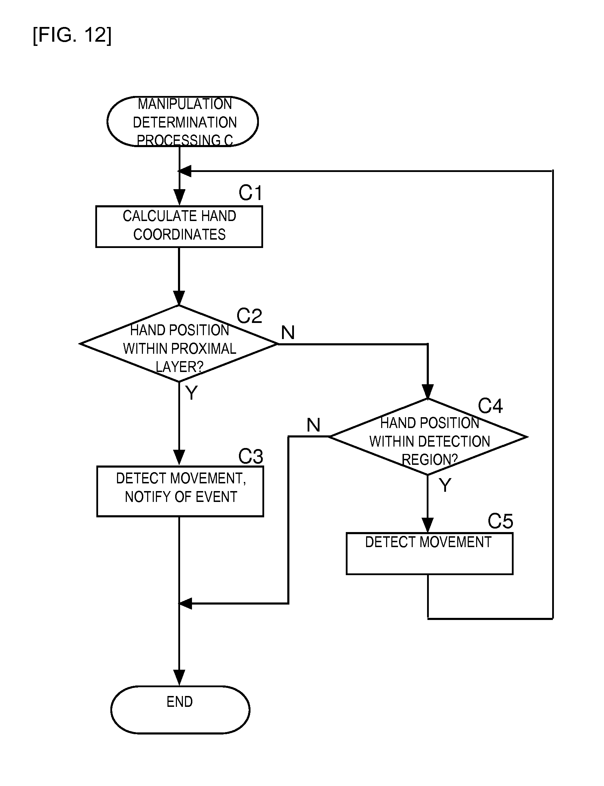

FIG. 12 is a flowchart showing the details of the manipulation determination processing C executed by the input device 1 pertaining to the fourth embodiment of the present invention. Upon deciding that no finger is sticking out to the image surface S from the hand 3, the main controller 20 calculates the hand coordinates (XYZ coordinates) (step C1). Then main controller 20 then confirms whether or not the position of the hand 3 is within the proximal manipulation layer 30 (step C2).

If it is determined that the position of the hand 3 is within the proximal manipulation layer 30 (Yes in step C2), the main controller 20 determines that the gesture is finished. The main controller 20 then uses information obtained from the light receiver 27 to detect movement of the hand 3 up to this point, execute an event, and notify the user of this (step C3). On the other hand, if the position of the hand 3 is not within the proximal manipulation layer 30 (No in step C2), the main controller 20 confirms whether or not the position of the hand 3 is within the gesture detection region (step C4). The gesture detection region is the same as the region described in the third embodiment.

If the position of the hand 3 is within the gesture detection region (Yes in step C4), the main controller 20 determines that the gesture is not yet finished, and uses information obtained from the light receiver 27 to detect movement of the hand 3 up to this point (step C5). After this, the main controller 20 goes back to step C1 and repeats the processing from that point on. On the other hand, if the position of the hand 3 is outside the gesture detection region (No in step C4), the main controller 20 determines that the hand 3 has not reached the proximal manipulation layer 30, and therefore that no gesture input was performed, and ends the manipulation determination processing C.

The effect of the fourth embodiment given above is the same as that in the third embodiment. Also, with the fourth embodiment, if the hand 3 has moved into the proximal manipulation layer 30, an event involving a gesture is generated, so determining the end of a gesture is easier.

### <Fifth Embodiment>

Next, the input device 1 of the fifth embodiment will be described. The configuration of the input device 1 in the fifth embodiment is the same as the configuration in the first embodiment. However, the input device 1 in the fifth embodiment differs from the first embodiment (and from the second to fourth embodiments) in the following respect. In the first embodiment, etc., the configuration was such that processing to determine the manipulation orientation of the indicator 3 (typically a hand) was performed as preliminary determination processing prior to performing processing to determine the input manipulation details. In the fifth embodiment, the configuration is such that processing to determine the manipulation region in which input is made is performed as the preliminary determination processing, instead of processing to determine the manipulation orientation. The following description will focus on this difference.

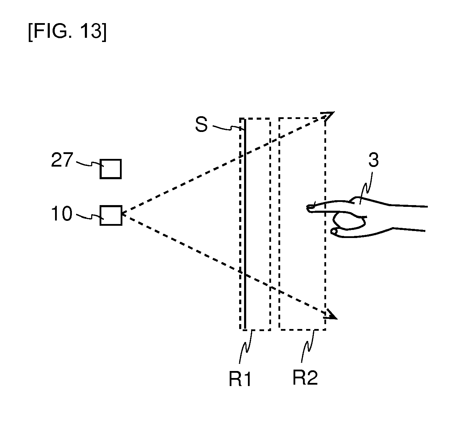

FIG. 13 is a simplified diagram illustrating the manipulation region in the input device 1 pertaining to the fifth embodiment of the present invention. As shown in FIG. 13, with the input device 1 in this embodiment, a first region R1 is set near the image surface S. Also, with the input device 1 in this embodiment, a second region R2 that is wider than the first region R1 is set at a position farther away from the image surface S than the first region R1. The "width" referred to here means the length of the region in a direction perpendicular to the image surface S.

If the preliminary determination processing determines that an indicator 3 (typically a hand) is present in the first region R1, the input device 1 concludes that pointing input is being performed with the indicator 3, and determines the input manipulation details. Also, if the preliminary determination processing determines that the indicator 3 is present in the second region R2, the input device 1 concludes that gesture input is being performed with the indicator 3, and determines the input manipulation details.

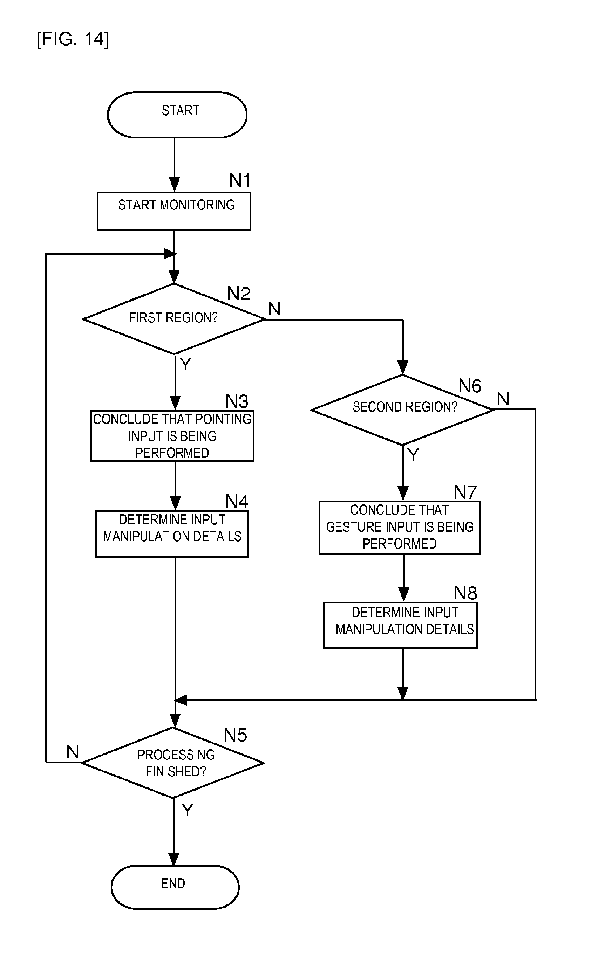

FIG. 14 is a flowchart of an input processing example executed by the input device 1 pertaining to the fifth embodiment of the present invention. A main controller 20 uses a detector that includes a light source unit 10 and a light receiver 27 to begin monitoring indicator information in the determination area (step N1). The determination area is set at a suitable position away from the image surface S. Also, the determination area is set on the opposite side from the side where the light source unit 10 and the light receiver 27 are provided, using the image surface S as a reference. The determination area is an example of a detection layer used in the preliminary determination processing of the present invention.

The main controller 20 confirms whether or not the indicator 3 is in the first region R1 based on the result detected by the light receiver 27 (step N2). In this example, the main controller 20 calculates the brightness in the determination area based on the detection result from the light receiver 27. If there are five or more points (pixels) with a higher brightness than a first threshold L in the determination area, the main controller 20 determines that the indicator 3 is present in the first region R1 (Yes in step N2).

If the indicator 3 is determined to be present in the first region R1, the main controller 20 concludes that pointing input is being performed (step N3), and performs determination processing on the input manipulation details (step N4). A specific example of determination processing on the input manipulation details is calculating the position (XY coordinates) of the indicator 3 and executing an event corresponding to the calculated coordinate position. If it is concluded that an input manipulation will be performed in the future by the user, such as when no command has been given to shut off the power to the device (No in step N5), the main controller 20 goes back to step N2 and performs preliminary determination processing. If it is concluded that input manipulation will not be performed (Yes in step N5), the main controller 20 ends the input processing.

On the other hand, if it is determined that the indicator 3 is not present in the first region R1 (No in step N2), the main controller 20 confirms whether or not the indicator 3 is considered to be in the second region R2 based on the result detected by the light receiver 27 (step N6). In this example, if there are five or more points in the determination area whose brightness (for all the points) is lower than a second threshold M and higher than a third threshold N, the main controller 20 determines that the indicator 3 is present in the second region R2 (Yes in step N6). Here, the first threshold L > the second threshold M > the third threshold N.

If it is determined that the indicator 3 is present in the second region R2, the main controller 20 concludes that gesture input is being performed (step N7), and performs determination processing of the input manipulation details (step N8). A specific example of determination processing on the input manipulation details is performing motion recognition or shape recognition (such as how many fingers) with a known optical flow analysis method, for example, and executing an event corresponding to said motion recognition and/or shape recognition.

The processing that comes after step N8 is the same as the processing after the above-mentioned step N4. If it is determined that the indicator 3 is not present in the second region R2 (No in step N6), the main controller 20 performs the processing of step N5. If the answer is Yes in step N6, reconfirmation processing as to whether or not the indicator 3 is considered to be present in the first region R1 may be performed again in order to improve the accuracy of the preliminary determination.

With this configuration of the fifth embodiment discussed above, determination related to the manipulation region of the indicator 3 by the preliminary determination processing is performed before determining the input manipulation details of the indicator 3. This reduces the probability that the pointing input and the gesture input are mixed up, which also reduces the probability that the input manipulation details will be incorrectly determined.

In this embodiment, brightness was used to determine the manipulation region, but this is just an example, and the index for determination may be changed as needed. Also, the above-mentioned determination reference when using brightness is just an example, and may be changed as needed. Also, processing to determine the manipulation orientation of the indicator 3 (discussed above) may be added to the preliminary determination processing in this embodiment. In this case, for example, the orientation detection layer 32 may be set at a position that is farther away from the image surface S than the determination area, for example.

### <Other>

The embodiments given above are examples of the present invention, and the scope of application of the present invention is not limited to or by the configuration of the embodiments given above. Naturally, the above embodiments may be suitably modified without departing from the technological concept of the present invention. Also, the various embodiments may be suitably combined to the extent possible.

For instance, in the embodiments given above, the light sources 11 to 13, which were used to project an image onto the screen 2, were utilized as light for detecting the indicator 3, but this is nothing but an example. Specifically, the configuration may be such that a dedicated light source for detecting the indicator 3 (such as a laser light source that emits infrared light) may be separately disposed within the input device 1. In this case, it is preferable if the light emitted from the dedicated light source can also be manipulated by the scanning mirror 17.

Also, in the embodiments given above, the input device 1 had the function of projecting an image onto the screen 2, but this is nothing but an example. Specifically, the input device 1 need not have a function of projecting an image. In this case, it will be necessary to provide an image display device separately from the input device 1.

Also, in the embodiments given above, the detector capable of detecting the position and state of the indicator 3 approaching the image surface S comprised the light sources 11 to 13, the scanning mirror 17, and the light receiver 27, but this is nothing but an example. For instance, the detector may be constituted by an imaging element.

In addition, the present invention may be applied to an input device in which an input manipulation is performed by utilizing a midair image. Here again, it will be less likely that a first input manipulation in which input is performed by indicating a particular region of the image surface S with an indicator, and a second input manipulation in which input is performed by making a gesture in front of the image surface S, will be mixed up. Accordingly, an input device can be provided that is easy to use and with which a wide variety of input manipulations can be accurately detected.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

### [DESCRIPTION OF THE REFERENCE NUMERALS]

- 1: input device
- 3: hand (indicator)
- 10: light source unit
- 11: red laser light source (part of the detector)
- 12: green laser light source (part of the detector)
- 13: blue laser light source (part of the detector)
- 17: scanning mirror (part of the detector, scanner)
- 27: light receiver (part of the detector)
- 20: main controller (processor)
- 30: proximal manipulation layer (second detection layer)
- 31: orientation detection layer (first detection layer)
- R1: first region (manipulation region)
- R2: second region (manipulation region)
- S: image surface

## Claims

1. An input device comprising:
a detector configured to detect an indicator approaching an image surface; and
a processor configured to perform input processing based on a detection result of the detector,
the processor being configured to perform preliminary determination processing depending on the detection result, and configured to perform determination processing for an input manipulation detail of the indicator based on a result of the preliminary determination processing and the detection result.

2. The input device according to claim 1, wherein
the preliminary determination processing includes processing to determine a manipulation region in which input will be made, and
the processor is configured to change the determination processing of the input manipulation detail according to the manipulation region.

3. The input device according to claim 2, wherein
the processor is configured to determine the manipulation region using the brightness obtained from the detection result produced by the detector.

4. The input device according to claim 2 or 3, wherein
the manipulation region includes a first region and a second region, and
the width in a direction perpendicular to the image surface is different in the first region and the second region.

5. The input device according to claim 4, wherein
when the manipulation region is determined to the first region, the processor is configured to determine the input manipulation detail according to the indicated position of the indicator, and
when the manipulation region is determined to be the second region, the processor is configured to determine the input manipulation detail according to at least one of the shape and movement of the indicator.

6. The input device according to any one of claims 1 to 5, wherein
the preliminary determination processing includes processing to determine manipulation orientation of the indicator.

7. The input device according to claim 6, wherein
the processor is configured to determine the manipulation orientation from the detection result in a first detection layer, and
the processor is configured to determine the input manipulation detail based on the manipulation orientation obtained in the preliminary determination processing and the detection result in a second detection layer provided closer to the image surface than the first detection layer.

8. The input device according to claim 6 or 7, wherein
the processor is configured not to determine the input manipulation detail in the second detection layer if the manipulation orientation has been determined to be a particular orientation, and configured to determine the input manipulation detail based on the movement of the indicator between the image surface and the first detection layer.

9. The input device according to claim 8, wherein
when the processor determines the input manipulation detail based on the movement of the indicator, the processor is configured to determine the input manipulation detail using the movement speed of the indicator.

10. The input device according to claim 8 or 9, wherein
when the processor determines the input manipulation detail based on the movement of the indicator, and when the processor determines that the indicator has moved into the second detection layer, the processor is configured to determine that an input manipulation based on the movement of the indicator has ended.

11. The input device according to any one of claims 7 to 10, wherein
the processor is configured to determine the input manipulation details in the second detection layer based on a change in the state of the indicator that accompanies contact with the image surface.

12. The input device according to any one of claims 6 to 11, wherein
the processor is configured to determine the manipulation orientation based on light intensity distribution.

13. The input device according to any one of claims 6 to 12, wherein
the processor is configured to determine the manipulation orientation based on a temporal change in the detection result.

14. The input device according to anyone of claims 1 to 13, wherein
the detector comprises a light source, an optical scanner that is configured to scan light from the light source, and a light receiver that is configured to receive reflected light by the indicator of the light that has been scanned by the optical scanner.

15. The input device according to anyone of claims 1 to 14, wherein
a detection layer used for the preliminary determination processing and a detection layer used for determination processing of the input manipulation detail are disposed on an opposite side from the light receiver and the light source, with the image surface in between.
